# EUROPEAN PATENT APPLICATION

(11) **EP 4 570 833 A1**
(43) Date of publication of application: **18.06.2025**
(21) Application number: 23852638.8
(22) Date of filing: 10.08.2023
(51) Int. Cl.: C08F 214/26, C08F 259/08

(54) **MODIFIED POLYTETRAFLUOROETHYLENE AND AQUEOUS DISPERSION**

(30) Priority: 10.08.2022 JP 2022127853
(71) Applicant: DAIKIN INDUSTRIES, LTD., Osaka-shi, Osaka 530-0001 (JP)
(72) Inventor: SATO, Hiroyuki, Osaka-Shi, Osaka 530-0001 (JP); ICHIKAWA, Kenji, Osaka-Shi, Osaka 530-0001 (JP); KATO, Taketo, Osaka-Shi, Osaka 530-0001 (JP); YAMANAKA, Taku, Osaka-Shi, Osaka 530-0001 (JP); YAMAMOTO, Emi, Osaka-Shi, Osaka 530-0001 (JP); YASUDA, Kohei, Osaka-Shi, Osaka 530-0001 (JP)
(74) Representative: Hoffmann Eitle
(86) International application number: PCT/JP2023/029336
(87) International publication number: WO 2024/034676

(57) **Abstract**

The disclosure provides a modified polytetrafluoroethylene having a low extrusion pressure despite having a high tensile strength at break, and an aqueous dispersion. Provided is a modified polytetrafluoroethylene having a tensile strength at break of higher than 32.8 N and a standard specific gravity 2.150 or more.

## Description

### TECHNICAL FIELD

The disclosure relates to modified polytetrafluoroethylenes and aqueous dispersions.

### BACKGROUND ART

When polytetrafluoroethylene is molded and highly expanded in a non-sintered state, a porous polytetrafluoroethylene film can be obtained. This porous film allows water vapor and other gases to pass through but does not allow water droplets to pass through due to the strong water repellency of polytetrafluoroethylene. Utilizing this unique property, polytetrafluoroethylene is applied to clothing and separation membranes, for example.

Patent Literature 1 discloses a fine powder including a tetrafluoroethylene homopolymer that has a predetermined standard specific gravity and a predetermined tensile strength at break.

Patent Literature 2 discloses a modified polytetrafluoroethylene including units based on perfluoro(propyl vinyl ether) and hexafluoropropylene.

### CITATION LIST

### - Patent Literature

Patent Literature 1: JP 2002-201217 A
Patent Literature 2: JP 2006-117912 A

### SUMMARY OF INVENTION

### - Technical Problem

The disclosure aims to provide a modified polytetrafluoroethylene having a low extrusion pressure despite having a high tensile strength at break, and an aqueous dispersion.

### - Solution to Problem

The disclosure (1) relates to a modified polytetrafluoroethylene having a tensile strength at break of higher than 32.8 N and a standard specific gravity of 2.150 or more.

The disclosure (2) relates to the modified polytetrafluoroethylene according to the disclosure (1), wherein the modified polytetrafluoroethylene has a strength ratio represented by "tensile strength at break (N)/extrusion pressure (MPa)" of higher than 1.90 N/MPa.

The disclosure (3) relates to the modified polytetrafluoroethylene according to the disclosure (1) or (2), wherein the modified polytetrafluoroethylene has a tensile strength at break of higher than 37.0 N.

The disclosure (4) relates to the modified polytetrafluoroethylene according to any one of the disclosures (1) to (3), wherein the modified polytetrafluoroethylene has a standard specific gravity of 2.155 or more.

The disclosure (5) relates to the modified polytetrafluoroethylene according to any one of the disclosures (1) to (4), wherein the modified polytetrafluoroethylene has a standard specific gravity of 2.160 or more.

The disclosure (6) relates to a modified polytetrafluoroethylene having a standard specific gravity of 2.150 or more and a strength ratio represented by "tensile strength at break (N)/extrusion pressure (MPa)" of higher than 1.90 N/MPa.

The disclosure (7) relates to a modified polytetrafluoroethylene including: a tetrafluoroethylene unit; and a vinylidene fluoride unit, the vinylidene fluoride unit being contained in an amount of 1.0% by mass or less in all polymerized units.

The disclosure (8) relates to the modified polytetrafluoroethylene according to any one of the disclosures (1) to (7), wherein the modified polytetrafluoroethylene is in the form of powder.

The disclosure (9) relates to the modified polytetrafluoroethylene according to any one of the disclosures (1) to (8), wherein the modified polytetrafluoroethylene is in the form of fine powder.

The disclosure (10) relates to an aqueous dispersion including the modified polytetrafluoroethylene according to any one of the disclosures (1) to (7) in the form of particles.

### - Advantageous Effects of Invention

The disclosure can provide a modified polytetrafluoroethylene having a low extrusion pressure despite having a high tensile strength at break, and an aqueous dispersion.

### DESCRIPTION OF EMBODIMENTS

In general, polytetrafluoroethylene (PTFE) has a higher tensile strength at break at a higher extrusion pressure. However, the resulting paste extrudate tends to be harder, decreasing the moldability of the extrudate.

As a result of intensive studies, contrary to the technical common knowledge, PTFE having a low extrusion pressure despite having a high tensile strength at break is found to be obtainable using a modified PTFE in which the tensile strength at break and the standard specific gravity are controlled.

The disclosure will be specifically described hereinbelow.

The disclosure provides a modified PTFE (hereafter, also referred to as a first modified PTFE) having a tensile strength at break of higher than 32.8 N and a standard specific gravity of 2.150 or more.

The first modified PTFE, having the above configuration, has a low extrusion pressure and excellent moldability despite having a high tensile strength at break.

The reason why the first modified PTFE has such physical properties is not clear. Presumably, a high standard specific gravity (a low molecular weight) can impart flexibility to the molded article, enabling uniform molding even at a low extrusion pressure. Moreover, use of a modified PTFE presumably allows molecules fibrillated during paste extrusion to bind to each other more tightly than in the case where homo PTFE is used, resulting in a high tensile strength at break.

The first modified PTFE has a tensile strength at break of higher than 32.8 N. The tensile strength at break is preferably 33.0 N or higher, more preferably 35.0 N or higher, still more preferably 37.0 N or higher, further preferably higher than 37.0 N, further preferably 38.0 N or higher, particularly preferably 40.0 N or higher, most preferably 42.0 N or higher. The higher the tensile strength at break, the better. Still, the tensile strength at break may be 100.0 N or lower, 80.0 N or lower, or 50.0 N or lower.

The tensile strength at break is a value obtained by the following method.

An expanded beading (article produced by stretching a beading) obtained in the later-described expansion test performed at a stretching speed of 100%/sec is clamped between movable jaws with a gauge length of 5.0 cm to be fixed, and subjected to a tensile test at 25°C at a rate of 300 mm/min. The strength at break is measured as the tensile strength at break.

The first modified PTFE has a standard specific gravity (SSG) of 2.150 or more. In order to further increase the tensile strength at break and further lower the extrusion pressure, the standard specific gravity is preferably 2.155 or more, more preferably 2.160 or more, still more preferably 2.165 or more, further preferably 2.170 or more, particularly preferably 2.175 or more, most preferably 2.180 or more, while preferably 2.250 or less, more preferably 2.240 or less, still more preferably 2.230 or less, further preferably 2.220 or less, particularly preferably 2.210 or less.

The standard specific gravity is measured by the water displacement method in conformity with ASTM D792 using a sample molded in conformity with ASTM D4895.

The first modified PTFE has a strength ratio represented by "tensile strength at break (N)/extrusion pressure (MPa)" of preferably higher than 1.90 N/MPa, more preferably 1.95 N/MPa or higher, still more preferably 2.00 N/MPa or higher, further preferably 2.05 N/MPa or higher, further preferably 2.10 N/MPa or higher, further preferably 2.20 N/MPa or higher, particularly preferably 2.25 N/MPa or higher. The higher the strength ratio, the better. Still, the strength ratio may be 5.00 N/MPa or lower or 4.00 N/MPa or lower.

The higher the strength ratio, the higher the tensile strength at break and the lower the extrusion pressure.

The tensile strength at break is a value obtained by the above method.

The extrusion pressure is a value obtained by the following method.

To 100 g of a modified PTFE powder is added 21.7 g of lubricant (trade name: Isopar H (registered trademark), ExxonMobil Corp.), followed by mixing at room temperature for three minutes, whereby a PTFE fine powder mixture is obtained. Next, the resulting PTFE fine powder mixture is left to stand for at least one hour at room temperature (25°C) before extrusion, and paste-extruded through an orifice (diameter: 2.5 mm, land length: 11 mm, introduction angle: 30°) at room temperature at a reduction ratio (a ratio of the die inlet cross-sectional area to the die outlet cross-sectional area) of 100:1, whereby uniform beadings (extrudates) are obtained. The extrusion speed, i.e., the ram speed is set to 20 inches/min (51 cm/min). The load at which the pressure is in equilibrium in the paste extrusion is measured, and the obtained value is divided by the cylinder cross-sectional area used in the paste extrusion. The resulting value is defined as the extrusion pressure (MPa).

The first modified PTFE is preferably expandable. Whether or not being "expandable" herein is determined based on the following standard.

A beading obtained by the paste extrusion is heated at 230°C for 30 minutes, whereby the lubricant is removed from the beading. The beading (extrudate) is cut to an appropriate length and the resulting sample is clamped at each end with a gap between the clamps of 2.0 inches (51 mm), followed by heating to 300°C in an air-circulating furnace. The clamps are then moved apart at a desired speed (stretching speed) until the separation distance corresponds to the desired degree of stretching (total degree of stretching). The stretching test is performed in this manner. The stretching method is essentially in conformity with the method disclosed in US 4576869 B, except that the extrusion speed is different (51 cm/min, not 84 cm/min). The "degree of stretching" shows the increase in length attributable to expansion, and is typically expressed in relation to the original length. In the above production method, the stretching speed is 1000%/sec and the total degree of stretching is 2400%. When no breakage occurs by the completion of the stretching, the beading is considered expandable.

In the production method, the modified PTFE of the disclosure preferably does not break by the completion of the stretching in the stretching test performed under the conditions of the stretching speed of 100%/sec and the total degree of stretching of 2400%.

The first modified PTFE includes a polymerized unit based on tetrafluoroethylene (TFE) (TFE unit) and a polymerized unit based on a modifying monomer (modifying monomer unit). The "modified PTFE" herein means a PTFE containing the modifying monomer unit in an amount of 1.0% by mass or less in all polymerized units.

The amount of the TFE unit in the modified PTFE may be 99.0% by mass or more.

The modified PTFE may consist of a TFE unit and a modifying monomer unit.

The amount of the modifying monomer unit in all polymerized units is 1.0% by mass or less. In order to further lower the extrusion pressure and further increase the tensile strength at break, the amount is preferably 0.80% by mass or less, more preferably 0.50% by mass or less, still more preferably 0.40% by mass or less, further preferably 0.30% by mass or less, further preferably 0.20% by mass or less, further preferably 0.10% by mass or less, further preferably 0.08% by mass or less, particularly preferably 0.05% by mass or less, most preferably 0.03% by mass or less, in all polymerized units.

The amount of the modifying monomer unit in all polymerized units may be 0.0001% by mass or more, 0.001% by mass or more, or 0.005% by mass or more.

The modifying monomer unit herein means a moiety that is part of the molecular structure of a modified PTFE and is derived from a modifying monomer.

The amounts of the above polymerized units can be calculated by any appropriate combination of NMR, FT-IR, elemental analysis, and X-ray fluorescence analysis in accordance with the types of the monomers.

The modifying monomer may be any monomer copolymerizable with TFE, and examples thereof include: perfluoroolefins such as hexafluoropropylene (HFP); hydrogen-containing fluoroolefins such as trifluoroethylene and vinylidene fluoride (VDF); perhaloolefins such as chlorotrifluoroethylene; perfluorovinyl ethers; perfluoroallyl ethers; (perfluoroalkyl)ethylenes; and ethylene. One modifying monomer may be used alone or two or more modifying monomers may be used in combination.

Examples of the perfluorovinyl ethers include, but are not limited to, unsaturated perfluoro compounds represented by the following formula (A):

CF₂=CF-ORf (A)

wherein Rf is a perfluoroorganic group. The term "perfluoroorganic group" herein means an organic group in which all hydrogen atoms bonded to any carbon atom are replaced by fluorine atoms. The perfluoro organic group may have an ether oxygen.

Examples of the perfluorovinyl ethers include a perfluoro(alkyl vinyl ether) (PAVE) represented by the formula (A) in which Rf is a C1-C10 perfluoroalkyl group. The perfluoroalkyl group preferably has a carbon number of 1 to 5.

Examples of the perfluoroalkyl group in the PAVE include a perfluoromethyl group, a perfluoroethyl group, a perfluoropropyl group, a perfluorobutyl group, a perfluoropentyl group, and a perfluorohexyl group.

Examples of the perfluorovinyl ethers also include:
those represented by the formula (A) wherein Rf is a C4-C9 perfluoro(alkoxy alkyl) group;
those represented by the formula (A) wherein Rf is a group represented by the following formula: 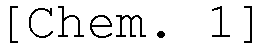 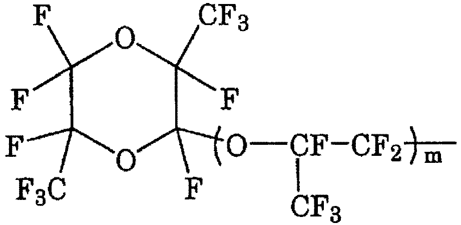 wherein m is an integer of 0 or 1 to 4; and
those represented by the formula (A) wherein Rf is a group represented by the following formula: 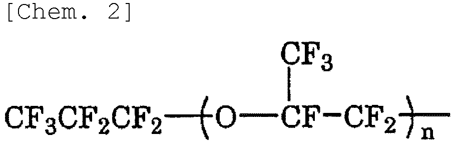 wherein n is an integer of 1 to 4.

Examples of the (perfluoroalkyl)ethylenes (PFAE) include, but are not limited to, (perfluorobutyl)ethylene (PFBE) and (perfluorohexyl)ethylene.

Examples of the perfluoroallyl ethers include fluoromonomers represented by the following formula (B):

CF₂=CF-CF₂-ORf¹ (B)

wherein Rf¹ is a perfluoroorganic group.

Rf¹ is preferably a C1-C10 perfluoroalkyl group or a C1-C10 perfluoroalkoxyalkyl group. The perfluoroallyl ether preferably includes at least one selected from the group consisting of CF₂=CF-CF₂-O-CF₃, CF₂=CF-CF₂-O-C₂F₅, CF₂=CF-CF₂-O-C₃F₇, and CF₂=CF-CF₂-O-C₄F₉, more preferably includes at least one selected from the group consisting of CF₂=CF-CF₂-O-C₂F₅, CF₂=CF-CF₂-O-C₃F₇, and CF₂=CF-CF₂-O-C₄F₉, and is still more preferably CF₂=CF-CF₂-O-CF₂CF₂CF₃.

In order to easily set the tensile strength at break and the standard specific gravity within the ranges described above, the modifying monomer preferably includes at least one selected from the group consisting of VDF, CTFE, PAVE, and HFP, more preferably at least one selected from the group consisting of VDF, CTFE, and HFP, still more preferably at least one selected from the group consisting of VDF and HFP. In order to further lower the extrusion pressure, further increase the tensile strength at break, and achieve a high tensile strength at break and a high elongation at break even when the resulting PTFE is processed at low temperatures, particularly preferred is VDF.

In order to improve the heat resistance, both VDF and HFP are preferably used together as the modifying monomer.

The first modified PTFE commonly has non-melt secondary processibility. The non-melt secondary processibility refers to a property of a polymer with which the melt flow rate is non-measurable at a temperature higher than the melting point in conformity with ASTM D1238 and D2116, in other words, a property with which the polymer does not easily flow even within a melting point range.

In the case where the first modified PTFE has no history of being heated to a temperature equal to or higher than 300°C, preferably, the first modified PTFE has at least one endothermic peak in a range of 333°C to 347°C on a heat-of-fusion curve obtained by increasing the temperature at a rate of 10°C/min using a differential scanning calorimeter (DSC), and has an enthalpy of fusion of 62 mJ/mg or higher at 290°C to 350°C calculated from the heat-of-fusion curve.

The first modified PTFE can be produced by, for example, a production method including a step (A) of emulsion-polymerizing TFE and a modifying monomer.

The emulsion polymerization can be performed, for example, in an aqueous medium in the presence of a fluorine-containing anionic surfactant and a polymerization initiator.

The emulsion polymerization may be performed by, for example, charging a polymerization reactor with an aqueous medium, the fluorine-containing anionic surfactant, a monomer, and optionally other additives, stirring the contents in the reactor, maintaining the reactor at a predetermined polymerization temperature, and then adding a predetermined amount of a polymerization initiator to start the polymerization reaction. After the polymerization reaction starts, the monomer, the polymerization initiator, a chain transfer agent, the surfactant, and the like may be added in accordance with the purposes.

In order to easily achieve the above-mentioned physical properties, the concentration of the modifying monomer (preferably VDF) in the gas in the reactor at the time of starting polymerization (when adding an initiator) is preferably set to 0.001 mol% or higher, more preferably 0.01 mol% or higher. The concentration may be 15 mol% or lower, preferably 6.0 mol% or lower, still more preferably 5.0 mol% or lower, further more preferably 3.0 mol% or lower, particularly preferably 1.0 mol% or lower. The modifying monomer concentration may be maintained thereafter until the end of the polymerization reaction, or depressurization may be performed during the polymerization reaction. The modifying monomer is preferably fed all at once before the start of polymerization. Still, a portion thereof may be added continuously or intermittently after the start of polymerization.

The polymerization initiator may be any initiator capable of generating radicals within the polymerization temperature range, and any known oil-soluble and/or water-soluble polymerization initiator may be used. Further, the initiator may be combined with a reducing agent, for example, into the form of a redox agent to start polymerization. The concentration of the polymerization initiator is appropriately determined in accordance with the type of the monomer, the molecular weight of the target modified PTFE, and the reaction rate.

The polymerization initiator used may be an oil-soluble radical polymerization initiator or a water-soluble radical polymerization initiator.

The oil-soluble radical polymerization initiator may be a known oil-soluble peroxide. Typical examples thereof include dialkyl peroxycarbonates such as diisopropyl peroxydicarbonate and di-sec-butyl peroxydicarbonate, peroxy esters such as t-butyl peroxyisobutyrate and t-butyl peroxypivalate, dialkyl peroxides such as di-t-butyl peroxide, as well as di(perfluoroacyl) or di(fluorochloroacyl) peroxides such as di(ω-hydro-dodecafluoroheptanoyl)peroxide, di(ω-hydro-tetradecafluoroheptanoyl)peroxide, di(ω-hydro-hexadecafluorononanoyl)peroxide, di(perfluorobutyryl)peroxide, di(perfluorovaleryl)peroxide, di(perfluorohexanoyl)peroxide, di(perfluoroheptanoyl)peroxide, di(perfluorooctanoyl)peroxide, di(perfluorononanoyl)peroxide, di(ω-chloro-hexafluorobutyryl)peroxide, di(ω-chloro-decafluorohexanoyl)peroxide, di(ω-chloro-tetradecafluorooctanoyl)peroxide, ω-hydro-dodecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotriacontafluorodocosanoyl)peroxide.

The water-soluble radical polymerization initiator may be a known water-soluble peroxide. Examples thereof include ammonium salts, potassium salts, and sodium salts of any of persulfuric acid, perboric acid, perchloric acid, perphosphoric acid, and percarbonic acid, t-butyl permaleate, and t-butyl hydroperoxide. The initiator may also contain a reducing agent such as a sulfite or a sulfurous acid salt. The amount thereof used may be 0.1 to 20 times the amount of the peroxide.

For example, in the case of the polymerization at a low temperature of 30°C or lower, a polymerization initiator used is preferably a redox initiator that is a combination of an oxidizing agent and a reducing agent. Examples of the oxidizing agent include a persulfate, an organic peroxide, potassium permanganate, manganese triacetate, ammonium cerium nitrate, and a bromate. Examples of the reducing agent include a sulfite, a bisulfite, a bromate, a diimine, and oxalic acid. Examples of the persulfate include ammonium persulfate and potassium persulfate. Examples of the sulfite include sodium sulfite and ammonium sulfite. In order to increase the decomposition rate of the initiator, the combination of the redox initiator is also preferably combined with a copper salt or an iron salt. An example of the copper salt is copper(II) sulfate and an example of the iron salt is iron(II) sulfate.

The oxidizing agent of the redox initiator is preferably permanganic acid or its salt, a persulfate, manganese triacetate, a cerium(IV) salt, or bromic acid or its salt. The reducing agent of the redox initiator is preferably a dicarboxylic acid or its salt, or a diimine.

More preferably, the oxidizing agent is permanganic acid or its salt, a persulfate, or bromic acid or its salt, and the reducing agent is a dicarboxylic acid or its salt.

Examples of the redox initiator include combinations of potassium permanganate/oxalic acid, potassium permanganate/ammonium oxalate, manganese triacetate/oxalic acid, manganese triacetate/ammonium oxalate, ammonium cerium nitrate/oxalic acid, and ammonium cerium nitrate/ammonium oxalate.

In the case of using a redox initiator, a polymerization vessel may be charged with an oxidizing agent or a reducing agent in advance, and the other may be continuously or intermittently added thereto to start polymerization. For example, in the case of using potassium permanganate/ammonium oxalate, preferably, a polymerization vessel is charged with ammonium oxalate and potassium permanganate is continuously added thereto.

In the redox initiator herein, "potassium permanganate/ammonium oxalate" refers to a combination of potassium permanganate and ammonium oxalate. The same applies to other compounds.

The redox initiator is particularly preferably a combination of an oxidizing agent in the form of a salt and a reducing agent in the form of a salt.

For example, the oxidizing agent in the form of a salt more preferably includes at least one selected from the group consisting of persulfates, permanganates, cerium(IV) salts, and bromates, still more preferably a permanganate, particularly preferably potassium permanganate.

The reducing agent in the form of a salt more preferably includes at least one selected from the group consisting of oxalates, malonates, succinates, glutarates, and bromates, still more preferably an oxalate, particularly preferably ammonium oxalate.

Specifically, the redox initiator preferably includes at least one selected from the group consisting of potassium permanganate/oxalic acid, potassium permanganate/ammonium oxalate, potassium bromate/ammonium sulfite, manganese triacetate/ammonium oxalate, and ammonium cerium nitrate/ammonium oxalate, more preferably at least one selected from the group consisting of potassium permanganate/oxalic acid, potassium permanganate/ammonium oxalate, potassium bromate/ammonium sulfite, and ammonium cerium nitrate/ammonium oxalate, still more preferably potassium permanganate/oxalic acid.

When a redox initiator is used, the oxidizing agent and the reducing agent may be added all at once at the initial stage of polymerization, or the reducing agent may be added all at once at the initial stage of polymerization and the oxidizing agent may be added continuously. Alternatively, the oxidizing agent may be added all at once at the initial stage of polymerization and the reducing agent may be added continuously, or both the oxidizing agent and the reducing agent may be added continuously.

In use of a redox initiator as a polymerization initiator, the amount of the oxidizing agent added is preferably 5 ppm or more, more preferably 10 ppm or more, while preferably 10000 ppm or less, more preferably 1000 ppm or less in the aqueous medium. The amount of the reducing agent added is preferably 5 ppm or more, more preferably 10 ppm or more, while preferably 10000 ppm or less, more preferably 1000 ppm or less in the aqueous medium.

In order to easily achieve a modified PTFE suitable for expansion applications, the amount of the oxidizing agent added is preferably 0.1 ppm or more, more preferably 1.0 ppm or more, while preferably 100 ppm or less, more preferably 10 ppm or less in the aqueous medium. The amount of the reducing agent added is preferably 0.1 ppm or more, more preferably 1.0 ppm or more, while preferably 100 ppm or less, more preferably 10 ppm or less in the aqueous medium.

In use of a redox initiator in the emulsion polymerization, the polymerization temperature is preferably 100°C or lower, more preferably 95°C or lower, still more preferably 90°C or lower. The polymerization temperature is preferably 10°C or higher, more preferably 20°C or higher, still more preferably 30°C or higher.

In order to easily set the tensile strength at break and the standard specific gravity within the ranges described above, preferred examples of the polymerization initiator include a water-soluble radical polymerization initiator and a redox initiator.

The polymerization initiator may be added in any amount. For example, it may be added in an amount that does not significantly decrease the polymerization rate (e.g., concentration of several parts per million relative to water) or more at one time in an early stage of polymerization or intermittently or continuously. The upper limit thereof falls within a range where the reaction temperature is allowed to increase while the heat is removed owing to the polymerization reaction heat through the device surfaces. The upper limit more preferably falls within a range where the polymerization reaction heat can be removed through the device surfaces. More specifically, the amount of the polymerization initiator added is preferably 1 ppm or more, more preferably 10 ppm or more, still more preferably 50 ppm or more in the aqueous medium. The amount of the polymerization initiator added is preferably 100000 ppm or less, more preferably 10000 ppm or less, still more preferably 5000 ppm or less.

In order to easily achieve the physical properties described above, the amount of the polymerization initiator added is preferably an amount equivalent to 0.1 ppm or more, more preferably an amount equivalent to 1.0 ppm or more, while it is preferably an amount equivalent to 100 ppm or less, more preferably an amount equivalent to 10 ppm or less in the aqueous medium.

The aqueous medium is a reaction medium in which polymerization is allowed to occur, and means a liquid that contains water. The aqueous medium may be any one containing water, and may be one containing water as well as, for example, a fluorine-free organic solvent such as alcohol, ether, and ketone and/or a fluorine-containing organic solvent having a boiling point of 40°C or lower.

In the emulsion polymerization, additives such as a nucleating agent, a chain transfer agent, a buffer, a pH adjuster, a stabilizing aid, a dispersion stabilizer, a radical scavenger, or a decomposer of a polymerization initiator may be used as needed.

In order to adjust the particle size, a nucleating agent is preferably added in the emulsion polymerization. The nucleating agent is preferably added before starting the polymerization reaction.

The nucleating agent may be a known one. The nucleating agent preferably includes at least one selected from the group consisting of fluoropolyethers, nonionic surfactants, and chain transfer agents, more preferably a nonionic surfactant.

The fluoropolyether may be, for example, perfluoropolyether (PFPE) acid or its salt. The perfluoropolyether (PFPE) acid or its salt may have any chain structure in which oxygen atoms in the main chain of the molecule are separated by saturated fluorocarbon groups containing 1 to 3 carbon atoms. Also, two or more types of fluorocarbon groups may be present in the molecule. A typical structure has a repeating unit represented by any of the following formulas:

(-CFCF₃-CF₂-O-)ₙ,

(-CF₂-CF₂-CF₂-O-)ₙ,

(-CF₂-CF₂-O-)ₙ-(-CF₂-O-)ₘ,

and

(-CF₂-CFCF₃-O-)ₙ-(-CF₂-O-)ₘ.

These structures are disclosed by Kasai in J. Appl. Polymer Sci. 57, 797 (1995). As disclosed in this literature, the PFPE acid or its salt may have a carboxylic acid group or its salt at one end or at each end. The PFPE acid or its salt may also have a sulfonic acid or phosphonic acid group or its salt at one end or at each end. Moreover, the PFPE acid or its salt may have a different group at each end. In the case of monofunctional PFPE, the other end of the molecule is usually perfluorinated but may have a hydrogen or chlorine atom. The PFPE acid or its salt contains at least two ether oxygens, preferably at least four ether oxygens, still more preferably at least six ether oxygens. Preferably, at least one of the fluorocarbon groups separating the ether oxygens, more preferably at least two of such fluorocarbon groups contain two or three carbon atoms. Further preferably, at least 50% of the fluorocarbon groups separating the ether oxygens contain two or three carbon atoms. Preferably, the PFPE acid or its salt contains a total of at least 15 carbon atoms, and, for example, a preferred minimum value of n or n + m in the repeating unit structure is at least 5. Two or more PFPE acids or their salts having an acid group at one end or at each end may be used in the production method of the disclosure. The PFPE acid or its salt preferably has a number average molecular weight of less than 6000 g/mol.

In order to further increase the molecular weight of the modified PTFE and improve the expandability, a radical scavenger or a decomposer of a polymerization initiator is preferably added in the emulsion polymerization. The radical scavenger or the decomposer of a polymerization initiator is added after the start of the polymerization reaction, preferably before 10% by mass or more, preferably 20% by mass or more of the total TFE to be consumed in the polymerization reaction is polymerized, while preferably before 50% by mass or less, preferably 40% by mass or less of the total TFE to be consumed in the polymerization reaction is polymerized. The radical scavenger or the decomposer of a polymerization initiator is preferably added after later-described depressurization and repressurization, if performed.

The radical scavenger used is a compound that has no reinitiation ability after addition or chain transfer to free radicals in the polymerization system. Specifically, used is a compound having a function of readily causing a chain transfer reaction with a primary radical or propagating radical and then generating a stable radical that does not react with a monomer or a compound having a function of readily causing an addition reaction with a primary radical or propagating radical to generate a stable radical.

In general, those called chain transfer agents are characterized by their activity in terms of chain transfer constant and reinitiation efficiency, and among them, those with almost 0% reinitiation efficiency are called radical scavengers.

The radical scavenger can also be described as, for example, a compound whose chain transfer constant to TFE at the polymerization temperature is greater than the polymerization rate constant and whose reinitiation efficiency is substantially 0%. The phrase "reinitiation efficiency is substantially 0%" means that the generated radicals make the radical scavenger a stable radical.

Preferably, the radical scavenger is a compound having a chain transfer constant (Cs) (= chain transfer rate constant (kc)/polymerization rate constant (kp)) to TFE at the polymerization temperature of greater than 0.1. The compound has a chain transfer constant (Cs) of more preferably 0.5 or greater, still more preferably 1.0 or greater, further preferably 5.0 or greater, particularly preferably 10 or greater.

The radical scavenger preferably includes, for example, at least one selected from the group consisting of aromatic hydroxy compounds, aromatic amines, N,N-diethylhydroxylamine, quinone compounds, terpenes, thiocyanates, and cupric chloride (CuCl₂).

Examples of aromatic hydroxy compounds include unsubstituted phenols, polyhydric phenols, salicylic acid, m- or p-salicylic acid, gallic acid, and naphthol.

Examples of unsubstituted phenols include o-, m-, or p-nitrophenol, o-, m-, or p-aminophenol, and p-nitrosophenol. Examples of polyhydric phenols include catechol, resorcinol, hydroquinone, pyrogallol, phloroglucin, and naphthoresorcinol.

Examples of aromatic amines include o-, m-, or p-phenylenediamine, and benzidine.

Examples of quinone compounds include o-, m-, or p-benzoquinone, 1,4-naphthoquinone, and alizarin.

Examples of thiocyanates include ammonium thiocyanate (NH₄SCN), potassium thiocyanate (KSCN), and sodium thiocyanate (NaSCN).

Among these, the radical scavenger is preferably an aromatic hydroxy compound, more preferably an unsubstituted phenol or a polyhydric phenol, still more preferably hydroquinone.

In order to moderately reduce the standard specific gravity, the amount of the radical scavenger added is preferably an amount equivalent to 3% to 500% (on a molar basis) of the polymerization initiator concentration. The lower limit is more preferably 10% (on a molar basis), still more preferably 15% (on a molar basis). The upper limit is more preferably 400% (on a molar basis), still more preferably 300% (on a molar basis).

The decomposer of a polymerization initiator may be any compound that can decompose the polymerization initiator used, and preferably includes, for example, at least one selected from the group consisting of sulfites, bisulfites, bromates, diimines, diimine salts, oxalic acid, oxalates, copper salts, and iron salts. Examples of sulfites include sodium sulfite and ammonium sulfite. An example of copper salts is copper(II) sulfate and an example of iron salts is iron(II) sulfate.

In order to moderately reduce the standard specific gravity, the amount of the decomposer added is preferably an amount equivalent to 3% to 500% (on a molar basis) of the initiator concentration. The lower limit is more preferably 10% (on a molar basis), still more preferably 15% (on a molar basis). The upper limit is more preferably 400% (on a molar basis), still more preferably 300% (on a molar basis).

In the emulsion polymerization, the polymerization temperature and the polymerization pressure are appropriately determined in accordance with the type of the monomer used, the molecular weight of the target modified PTFE, and the reaction rate. The polymerization temperature is typically 5°C to 150°C. The polymerization temperature is preferably 10°C or higher, more preferably 30°C or higher, still more preferably 50°C or higher. The polymerization temperature is more preferably 120°C or lower, still more preferably 100°C or lower.

The polymerization pressure is 0.05 to 10 MPaG. The polymerization pressure is more preferably 0.3 MPaG or higher, still more preferably 0.5 MPaG or higher. The polymerization pressure is more preferably 5.0 MPaG or lower, still more preferably 3.0 MPaG or lower.

In the emulsion polymerization, depressurization is preferably not performed until the polymerization is completed after the modifying monomer is introduced into the polymerization container. This allows the modifying monomer to remain in the system until the end of polymerization, leading to a still higher tensile strength at break of the modified PTFE to be obtained.

The production method may include a step (B) of coagulating the aqueous dispersion to obtain a wet powder of the modified PTFE. The coagulation can be performed by a known method.

The production method may include a step (C) of drying the wet powder. The drying is typically performed by means such as vacuum, high frequency, or hot air, while the wet powder is kept in a state where it does not flow so much, preferably in a stationary state. Friction between powders, especially at high temperatures, generally has an unfavorable effect on fine powder PTFE. This is because particles made of PTFE of this type are easily fibrillated even by a small shearing force to lose their original stable particle structure.

In order to lower the extrusion pressure, the drying temperature is preferably 300°C or lower, more preferably 250°C or lower, still more preferably 230°C or lower, further preferably 210°C or lower, further preferably 190°C or lower, particularly preferably 170°C or lower. In order to achieve an improved tensile strength at break, the drying temperature is preferably 10°C or higher, more preferably 100°C or higher, still more preferably 150°C or higher, further preferably 170°C or higher, further preferably 190°C or higher, particularly preferably 210°C or higher. In order to further increase the strength ratio, the drying temperature is preferably appropriately adjusted within this temperature range.

The disclosure also provides a modified PTFE (hereafter, also referred to as a second modified PTFE) having a standard specific gravity of 2.150 or more and a strength ratio represented by "tensile strength at break (N)/extrusion pressure (MPa)" of higher than 1.90 N/MPa. The second modified PTFE, having the above configuration, has a low extrusion pressure and excellent moldability despite having a high tensile strength at break.

The second modified PTFE has a standard specific gravity (SSG) of 2.150 or more. In order to further increase the tensile strength at break and further lower the extrusion pressure, the standard specific gravity is preferably 2.155 or more, more preferably 2.160 or more, still more preferably 2.165 or more, further preferably 2.170 or more, particularly preferably 2.175 or more, most preferably 2.180 or more, while preferably 2.250 or less, more preferably 2.240 or less, still more preferably 2.230 or less, further preferably 2.220 or less, particularly preferably 2.210 or less.

The second modified PTFE has a strength ratio represented by "tensile strength at break (N)/extrusion pressure (MPa)" of higher than 1.90 N/MPa, preferably 1.95 N/MPa or higher, more preferably 2.00 N/MPa or higher, still more preferably 2.05 N/MPa or higher, further preferably 2.10 N/MPa or higher, further preferably 2.20 N/MPa or higher, particularly preferably 2.25 N/MPa or higher. The higher the strength ratio, the better. Still, the strength ratio may be 5.00 N/MPa or lower, or 4.00 N/MPa or lower.

The second modified PTFE has a tensile strength at break of preferably higher than 32.8 N, more preferably 33.0 N or higher, still more preferably 35.0 N or higher, further preferably 37.0 N or higher, further preferably higher than 37.0 N, further preferably 38.0 N or higher, particularly preferably 40.0 N or higher, most preferably 42.0 N or higher. The higher the tensile strength at break, the better. Still, the tensile strength at break may be 100.0 N or lower, 80.0 N or lower, or 50.0 N or lower.

The second modified PTFE is preferably expandable.

The second modified PTFE includes a TFE unit and a modifying monomer unit. Examples of the modifying monomer include those mentioned as examples for the first modified PTFE. The amount of the modifying monomer may also fall within the same range as that for the first modified PTFE.

The second modified PTFE may have the same physical properties as the first modified PTFE, except that the strength ratio is higher than 1.90 N/MPa.

The second modified PTFE can be produced by the production method that has been described for the first modified PTFE.

The disclosure also provides a modified PTFE (hereafter, also referred to as a third modified PTFE) including a tetrafluoroethylene (TFE) unit and a vinylidene fluoride (VDF) unit, the VDF unit being contained in an amount of 1.0% by mass or less in all polymerized units.

The third modified PTFE, having the above configuration, has a low extrusion pressure and excellent moldability despite having a high tensile strength at break.

The third modified PTFE has a high tensile strength at break and a high elongation at break, even when processed at low temperatures. In the case where a modifying monomer such as perfluoro(alkyl vinyl ether) or hexafluoropropylene is used, the tensile strength at break and the elongation at break of the resulting modified PTFE are lowered as the processing (e.g., firing) temperature is lowered. In contrast, in the case where a VDF unit is used as a modifying monomer, surprisingly, both the tensile strength at break and the elongation at break are found to be high even when the resulting modified PTFE is processed at low temperatures (e.g., 340°C or lower).

The amount of the VDF unit in all polymerized units is 1.0% by mass or less. In order to further lower the extrusion pressure and further increase the tensile strength at break, the amount is preferably 0.80% by mass or less, more preferably 0.50% by mass or less, still more preferably 0.40% by mass or less, further preferably 0.30% by mass or less, further preferably 0.20% by mass or less, further preferably 0.10% by mass or less, further preferably 0.08% by mass or less, particularly preferably 0.05% by mass or less, most preferably 0.03% by mass or less, in all polymerized units.

The amount of the VDF unit in all polymerized units may be 0.0001% by mass or more, 0.001% by mass or more, or 0.005% by mass or more.

The VDF unit herein means a moiety that is part of the molecular structure of a modified PTFE and is derived from VDF.

The amount of the TFE unit in the third modified PTFE may be 99.0% by mass or more.

The third modified PTFE may consist of the TFE unit and the VDF unit or include the TFE unit and the VDF unit as well as a polymerized unit based on a modifying monomer different from VDF (different modifying monomer unit).

Examples of the different modifying monomer include those mentioned as examples for the first modified PTFE. Among these, HFP is preferred from the standpoint of heat resistance improvement.

In the case where the second modified PTFE includes the different modifying monomer unit, the total amount of the VDF unit and the different modifying monomer unit is preferably 1.0% by mass or less in all polymerized units.

In a preferred embodiment, the second modified PTFE includes a TFE unit, a VDF unit, and a HFP unit, and the total amount of the VDF unit and the HFP unit is 1.0% by mass or less in all polymerized units.

The third modified PTFE has a tensile strength at break of preferably higher than 32.8 N, more preferably 33.0 N or higher, still more preferably 35.0 N or higher, further preferably 37.0 N or higher, further preferably higher than 37.0 N, further preferably 38.0 N or higher, particularly preferably 40.0 N or higher, most preferably 42.0 N or higher. The higher the tensile strength at break, the better. Still, the tensile strength at break may be 100.0 N or lower, 80.0 N or lower, or 50.0 N or lower.

In order to further increase the tensile strength at break and further lower the extrusion pressure, the third modified PTFE has a standard specific gravity (SSG) of preferably 2.150 or more, more preferably 2.155 or more, still more preferably 2.160 or more, further preferably 2.165 or more, further preferably 2.170 or more, particularly preferably 2.175 or more, most preferably 2.180 or more, while preferably 2.250 or less, more preferably 2.240 or less, still more preferably 2.230 or less, further preferably 2.220 or less, particularly preferably 2.210 or less.

The third modified PTFE has a strength ratio represented by "tensile strength at break (N)/extrusion pressure (MPa)" of preferably higher than 1.90 N/MPa, more preferably 1.95 N/MPa or higher, still more preferably 2.00 N/MPa or higher, further preferably 2.05 N/MPa or higher, further preferably 2.10 N/MPa or higher, further preferably 2.20 N/MPa or higher, particularly preferably 2.25 N/MPa or higher. The higher the strength ratio, the better. Still, the strength ratio may be 5.00 N/MPa or lower, or 4.00 N/MPa or lower.

The third modified PTFE is preferably expandable.

The third modified PTFE may have the same physical properties as the first modified PTFE, except that the modifying monomer is VDF.

The third modified PTFE can be produced by the production method that has been described for the first modified PTFE using VDF as a modifying monomer.

The first, second, and third modified PTFEs are preferably in the form of powder, more preferably in the form of fine powder.

The first, second, and third modified PTFEs can also be provided in the form of aqueous dispersions. An aqueous dispersion containing particles of any of the first, second, and third modified PTFEs is also a preferred embodiment of the disclosure. The aqueous dispersion of the disclosure enables the formation of a coating film that is resistant to cracks.

The first, second, and third modified PTFEs have an average primary particle size of preferably 500 nm or smaller, more preferably 350 nm or smaller, still more preferably 300 nm or smaller, particularly preferably 280 nm or smaller, while preferably 100 nm or greater, more preferably 150 nm or greater, still more preferably 170 nm or greater, particularly preferably 200 nm or greater.

The average primary particle size is measured by the following method.

A modified PTFE aqueous dispersion is diluted with water to a solid content concentration of 0.15% by mass. The transmittance of 550-nm light relative to the unit length of the resulting diluted latex is measured. The Feret diameters in a transmission electron microscopic image are measured and the number-based length average particle size is determined therefrom. A calibration curve is obtained from these values. Using this calibration curve, the number average particle size is determined from the measured transmittance of 550-nm light incident on each sample, and defined as the average primary particle size.

The first, second, and third modified PTFEs may have an average aspect ratio of 2.0 or lower, preferably 1.8 or lower, more preferably 1.7 or lower, still more preferably 1.6 or lower, further preferably 1.5 or lower, further preferably 1.4 or lower, even more preferably 1.3 or lower, particularly preferably 1.2 or lower, most preferably 1.1 or lower. The average aspect ratio may be 1.0 or higher.

The average aspect ratio is determined as follows. Specifically, a fluororesin powder or an aqueous dispersion of the fluororesin diluted to have a solid content concentration of about 1% by mass is observed using a scanning electron microscope (SEM) and 200 or more particles randomly selected are imaged. The ratio of the major and minor axes of each particle is then obtained and the average thereof is defined as the average aspect ratio.

The first, second, and third modified PTFEs have an average secondary particle size of 100 µm or greater, more preferably 200 µm or greater, still more preferably 300 µm or greater, while preferably 2000 µm or smaller, more preferably 1000 µm or smaller, still more preferably 800 µm or smaller, particularly preferably 700 µm or smaller.

The average secondary particle size is measured in conformity with JIS K 6891.

The first, second, and third modified PTFEs are particularly useful as raw materials of expanded articles. An expanded article including any of the first, second, and third modified PTFEs is also a preferred embodiment of the disclosure.

The expanded article can be obtained by expanding any of the first, second, and third modified PTFEs.

The expanded article is also preferably in the form of a film, a tube, fibers, or rods.

The expanded article in the form of a film (expanded film or porous film) can be formed by expansion by a known PTFE expansion method.

Preferably, a sheet-shaped or rod-shaped paste extrudate is roll-expanded in an extruding direction, whereby a uniaxially expanded film can be obtained.

Further expansion in a transverse direction using a tenter, for example, can provide a biaxially expanded film.

Prebaking treatment is also preferably performed before expansion.

The expanded article can be formed as a porous article having a high porosity, and can be suitably used as a filter material for a variety of microfiltration membranes such as air filters and chemical filters and a support member for polymer electrolyte membranes.

The expanded article is also useful as a material of products used in the textile field, the medical treatment field, the electrochemical field, the sealant field, the air filter field, the ventilation/internal pressure adjustment field, the liquid filter field, and the consumer goods field.

The following provides examples of specific applications.

### - Electrochemical field

Examples of the applications in this field include prepregs for dielectric materials, EMI-shielding materials, and heat conductive materials. More specifically, examples thereof include printed circuit boards, electromagnetic interference shielding materials, insulating heat conductive materials, and insulating materials.

### - Sealant field

Examples of the applications in this field include gaskets, packings, pump diaphrams, pump tubes, and sealants for aircraft.

### - Air filter field

Examples of the applications in this field include ULPA filters (for production of semiconductors), HEPA filters (for hospitals and for production of semiconductors), cylindrical cartridge filters (for industries), bag filters (for industries), heat-resistant bag filters (for exhaust gas treatment), heat-resistant pleated filters (for exhaust gas treatment), SINBRAN filters (for industries), catalyst filters (for exhaust gas treatment), absorbent-attached filters (for HDD embedment), absorbent-attached vent filters (for HDD embedment), vent filters (for HDD embedment, for example), filters for cleaners (for cleaners), general-purpose multilayer felt materials, cartridge filters for GT (for interchangeable items for GT), and cooling filters (for housings of electronic devices).

### - Ventilation/internal pressure adjustment field

Examples of the applications in this field include materials for freeze drying such as containers for freeze drying, ventilation materials for automobiles for electronic circuits and lamps, applications relating to containers such as container caps, protective ventilation for electronic devices, including small devices such as tablet terminals and mobile phone terminals, and ventilation for medical treatment.

### - Liquid filter field

Examples of the applications in this field include liquid filters for semiconductors (for production of semiconductors), hydrophilic PTFE filters (for production of semiconductors), filters for chemicals (for liquid chemical treatment), filters for pure water production lines (for production of pure water), and back-washing liquid filters (for treatment of industrial drainage).

### - Consumer goods field

Examples of the applications in this field include clothes, cable guides (movable wires for motor bikes), clothes for motor cyclists, cast liners (medical supporters), filters for cleaners, bagpipes (musical instrument), cables (signal cables for guitars), and strings (for string instrument).

### - Textile field

Examples of the applications in this field include PTFE fibers (fiber materials), machine threads (textiles), weaving yarns (textiles), and ropes.

### - Medical treatment field

Examples of the applications in this field include implants (extending articles), artificial blood vessels, catheters, general surgical operations (tissue reinforcing materials), products for head and neck (dura mater alternatives), oral health (tissue regenerative medicine), and orthopedics (bandages).

The first, second, and third modified PTFEs are also suitably used for various additives such as dustproof additives, anti-dripping agents, and binders for batteries, coating applications, and applications of impregnation of glass cloth.

An aqueous dispersion containing particles of any of the first, second, and third modified PTFEs is usable in various applications including use as a surface coating agent for cooking utensils, use in production of impregnated articles such as roofing materials by impregnating glass fibers, carbon fibers, Kevlar (registered trademark) fibers, etc. with the aqueous dispersion, and use in formation of films by applying the aqueous dispersion to articles to be coated, followed by sintering in applications including high-frequency printed circuit boards, transfer belts, and packings.

It should be appreciated that a variety of modifications and changes in the structure and other details may be made to the aforementioned embodiments without departing from the spirit and scope of the claims.

### EXAMPLES

The disclosure is described in more detail below with reference to examples, but is not limited to these examples.

The physical properties were determined by the following methods.

### Polymer solid content

A modified PTFE aqueous dispersion in an amount of 1 g was dried in an air dryer at 150°C for 60 minutes, and the ratio of the mass of the heating residue to the mass (1 g) of the aqueous dispersion, expressed as a percentage, was used as the polymer solid content.

### Amount of modifying monomer

The VDF content was determined by the following method. ¹⁹F-NMR was performed on a PTFE powder. The PTFE powder was press-molded into a thin-film disc and the thin-film disc was subjected to FT-IR measurement, so that infrared absorbances were obtained. Based on the infrared absorbances obtained, the ratio (absorbance at 1429 cm⁻¹)/(absorbance at 2360 cm⁻¹) was determined. Based on the measurement values of the ¹⁹F-NMR and the absorbance ratio, a calibration curve was obtained. The VDF content was calculated from the calibration curve.

A PTFE powder was press-molded into a thin-film disc and the thin-film disc was subjected to FT-IR measurement, so that infrared absorbances were obtained. The amount of HFP was determined by multiplying the ratio (absorbance at 982 cm⁻¹)/(absorbance at 935 cm⁻¹) by 0.3.

A PTFE powder was press-molded into a thin-film disc and the thin-film disc was subjected to FT-IR measurement, so that infrared absorbances were obtained. The CTFE content was determined by multiplying the ratio (absorbance at 957 cm⁻¹)/(absorbance at 2360 cm⁻¹) by 0.58.

### Standard specific gravity (SSG)

The SSG was determined by the water displacement method in conformity with ASTM D792 using a sample molded in conformity with ASTM D4895.

### Average primary particle size

A modified PTFE aqueous dispersion was diluted with water to a solid content concentration of 0.15% by mass. The transmittance of 550-nm light relative to the unit length of the resulting diluted latex was measured. The Feret diameters in a transmission electron microscopic image were measured and the number-based length average particle size was determined therefrom. A calibration curve was obtained from these values. Using this calibration curve, the number average particle size was determined from the measured transmittance of 550-nm light incident on each sample, and defined as the average primary particle size.

### Extrusion pressure

To 100 g of a modified PTFE powder was added 21.7 g of lubricant (trade name: Isopar H (registered trademark), ExxonMobil Corp.), followed by mixing at room temperature for three minutes, whereby a PTFE fine powder mixture was obtained. Next, the resulting PTFE fine powder mixture was left to stand for at least one hour at room temperature (25°C) before extrusion, and paste-extruded through an orifice (diameter: 2.5 mm, land length: 11 mm, introduction angle: 30°) at room temperature at a reduction ratio (a ratio of the die inlet cross-sectional area to the die outlet cross-sectional area) of 100:1, whereby uniform beadings (extrudates) were obtained. The extrusion speed, i.e., the ram speed was set to 20 inches/min (51 cm/min). The load at which the pressure was in equilibrium in the paste extrusion was measured, and the obtained value was divided by the cylinder cross-sectional area used in the paste extrusion. The resulting value was defined as the extrusion pressure (MPa).

### Expansion test

A beading obtained by the above paste extrusion was heated at 230°C for 30 minutes, whereby the lubricant was removed from the beading. The beading (extrudate) was cut to an appropriate length and the resulting sample was clamped at each end with a gap between the clamps of 2.0 inches (51 mm), followed by heating to 300°C in an air-circulating furnace. The clamps were then moved apart at a desired speed (stretching speed) until the separation distance corresponded to the desired degree of stretching (total degree of stretching). The stretching test was performed in this manner. The stretching method is essentially in conformity with the method disclosed in US 4576869 B, except that the extrusion speed is different (51 cm/min, not 84 cm/min). The "degree of stretching" shows the increase in length attributable to expansion, and is typically expressed in relation to the original length. In the above production method, the stretching speed is 100%/sec and the total degree of stretching is 2400%.

### Tensile strength at break

An expanded beading (article produced by stretching a beading) obtained in the above expansion test was clamped between movable jaws with a gauge length of 5.0 cm to be fixed, and subjected to a tensile test at 25°C at a rate of 300 mm/min. The strength at break was measured as the tensile strength at break.

### Strength ratio

The strength ratio was determined by assigning the values to "tensile strength at break (N)/extrusion pressure (MPa)".

### Synthesis Example 1

A white solid A was obtained by the method disclosed in Synthesis Example 1 of WO 2021/045228.

### Example 1

A 6-L SUS reactor equipped with a stirrer was charged with 3600 g of deionized water, 180 g of paraffin wax, 5.4 g of the white solid A, and 0.0265 g of oxalic acid. Next, the contents of the reactor were heated to 70°C while being suctioned and the reactor was simultaneously purged with tetrafluoroethylene (TFE) to remove oxygen in the reactor, and the contents were stirred. To the reactor was injected 1.70 g of vinylidene fluoride (VDF) with TFE, followed by further addition of TFE to set the pressure to 2.70 MPaG. A potassium permanganate aqueous solution containing 3.4 mg of potassium permanganate dissolved in deionized water was continuously added to the reactor as an initiator. After the initiator was injected, the pressure dropped and start of polymerization was observed. TFE was added to the reactor so that the pressure was constant at 2.70 MPaG. When the amount of TFE fed reached 430 g, feeding of the potassium permanganate aqueous solution was stopped. When the amount of TFE fed reached 1815 g, feeding of TFE was stopped, stirring was stopped, and the reaction was terminated. Thereafter, the reactor was evacuated to return the pressure in the reactor to normal pressure, followed by nitrogen purge. The contents were taken out from the reactor and cooled. The paraffin wax was removed, whereby a PTFE aqueous dispersion was obtained. The solid content concentration of the resulting PTFE aqueous dispersion was 33.3% by mass and the average primary particle size was 251 nm.

The PTFE aqueous dispersion obtained was diluted to a solid content concentration of 13% by mass. The dilution was stirred vigorously in a container equipped with a stirrer to be coagulated. The wet powder resulting from the coagulation was taken out and dried at 240°C for 18 hours, whereby a PTFE powder was obtained. Various physical properties of the resulting PTFE powder were measured. The results are shown in Table 1.

### Example 2

Polymerization was performed under the same conditions as those in Example 1, except that the amount of VDF fed was set to 0.4 g, the amount of potassium permanganate was changed from 3.4 mg to 5.6 mg, and feeding of the potassium permanganate aqueous solution was stopped when the amount of TFE fed reached 870 g. The solid content concentration of the resulting PTFE aqueous dispersion was 33.4% by mass, and the average primary particle size was 263 nm.

A PTFE powder was obtained as in Example 1 using the resulting PTFE aqueous dispersion. Various physical properties of the resulting PTFE powder were measured. The results are shown in Table 1.

### Example 3

Polymerization was performed under the same conditions as those in Example 1, except that the amount of VDF fed was set to 2.56 g, the amount of potassium permanganate was set to 3.7 mg, stirring was stopped and the inside of the polymerization tank was depressurized to the atmospheric pressure when the amount of TFE fed reached 430 g, and then TFE was introduced to set the pressure to 2.7 MPaG and stirring was restarted. The solid content concentration of the resulting PTFE aqueous dispersion was 33.9% by mass, and the average primary particle size was 246 nm.

A PTFE powder was obtained as in Example 1 using the resulting PTFE aqueous dispersion. Various physical properties of the resulting PTFE powder were measured. The results are shown in Table 1.

### Example 4

Polymerization was performed under the same conditions as those in Example 1, except that the amount of VDF fed was set to 32.0 g and the amount of potassium permanganate was changed from 3.4 mg to 3.9 mg. The solid content concentration of the resulting PTFE aqueous dispersion was 33.5% by mass, and the average primary particle size was 224 nm.

A PTFE powder was obtained as in Example 1 using the resulting PTFE aqueous dispersion. Various physical properties of the resulting PTFE powder were measured. The results are shown in Table 1.

### Example 5

A 6-L SUS reactor equipped with a stirrer was charged with 3600 g of deionized water, 180 g of paraffin wax, and 5.4 g of the white solid A. Next, the contents of the reactor were heated to 80°C while being suctioned and the reactor was simultaneously purged with tetrafluoroethylene (TFE) to remove oxygen in the reactor, and the contents were stirred. To the reactor was injected 5.82 g of vinylidene fluoride (VDF) with TFE, followed by further addition of TFE to set the pressure to 2.70 MPaG. An aqueous solution containing 7.2 mg of ammonium persulfate (APS) dissolved in deionized water was added to the reactor as an initiator. After injection of the initiator, the pressure dropped and the onset of polymerization was observed. TFE was added to the reactor so that the pressure was constant at 2.70 MPaG. When the amount of TFE fed reached 430 g, an aqueous solution containing 36.0 mg of hydroquinone in deionized water was added. When the amount of TFE fed reached 1580 g, feeding of TFE was stopped, stirring was stopped, and the reaction was terminated. Thereafter, the reactor was evacuated to return the pressure in the reactor to normal pressure, followed by nitrogen purge. The contents were taken out from the reactor and cooled. The paraffin wax was removed, whereby a PTFE aqueous dispersion was obtained. The solid content concentration of the resulting PTFE aqueous dispersion was 30.2% by mass, and the average primary particle size was 214 nm.

The PTFE aqueous dispersion obtained was diluted to a solid content concentration of 13% by mass. The dilution was stirred vigorously in a container equipped with a stirrer to be coagulated. The wet powder resulting from the coagulation was taken out and dried at 210°C for 18 hours, whereby a PTFE powder was obtained. Various physical properties of the resulting PTFE powder were measured. The results are shown in Table 1.

### Example 6

Polymerization was performed under the same conditions as those in Example 5, except that the amount of VDF fed was set to 3.1 g and the amount of hydroquinone fed was set to 18.2 mg, whereby a PTFE aqueous dispersion was obtained. The solid content concentration of the resulting PTFE aqueous dispersion was 30.3% by mass and the average primary particle size was 223 nm.

A PTFE powder was obtained as in Example 5 using the resulting PTFE aqueous dispersion. Various physical properties of the resulting PTFE powder were measured. The results are shown in Table 1.

### Example 7

Polymerization was performed under the same conditions as those in Example 5, except that the amount of VDF fed was set to 0.19 g and the amount of hydroquinone fed was set to 11.0 mg, whereby a PTFE aqueous dispersion was obtained. The solid content concentration of the resulting PTFE aqueous dispersion was 30.3% by mass, and the average primary particle size was 265 nm.

A PTFE powder was obtained as in Example 5 using the resulting PTFE aqueous dispersion. Various physical properties of the resulting PTFE powder were measured. The results are shown in Table 1.

### Example 8

Polymerization was performed under the same conditions as those in Example 5, except that the amount of VDF fed was set to 0.36 g, whereby a PTFE aqueous dispersion was obtained. The solid content concentration of the resulting PTFE aqueous dispersion was 29.8% by mass, and the average primary particle size was 261 nm.

A PTFE powder was obtained as in Example 5 using the resulting PTFE aqueous dispersion. Various physical properties of the resulting PTFE powder were measured. The results are shown in Table 1.

### Example 9

Polymerization was performed under the same conditions as those in Example 5, except that the amount of VDF fed was set to 2.1 g, the amount of hydroquinone fed was set to 18.0 mg, stirring was stopped and the inside of the polymerization tank was depressurized to the atmospheric pressure when the amount of TFE fed was reached 430 g, and then TFE was introduced to set the pressure to 2.7 MPaG and stirring was restarted. The solid content concentration of the resulting PTFE aqueous dispersion was 30.3% by mass, and the average primary particle size was 226 nm.

A PTFE powder was obtained as in Example 5 using the resulting PTFE aqueous dispersion. Various physical properties of the resulting PTFE powder were measured. The results are shown in Table 1.

### Example 10

Polymerization was performed under the same conditions as those in Example 5, except that the amount of VDF was set to 0.52 g, the amount of ammonium persulfate (APS) was set to 15.4 mg, the amount of hydroquinone fed was set to 17.9 mg, and the final amount of TFE fed was set to 1520 g at a polymerization pressure of 0.80 MPa and a polymerization temperature of 70°C, whereby a PTFE aqueous dispersion was obtained. The solid content concentration of the resulting PTFE aqueous dispersion was 29.8% by mass, and the average primary particle size was 278 nm.

Using the resulting PTFE aqueous dispersion, a wet powder resulting from the coagulation was taken out as in Example 5, followed by drying at 180°C for 18 hours, whereby a PTFE powder was obtained. Various physical properties of the resulting PTFE powder were measured. The results are shown in Table 1.

### Example 11

Polymerization was performed under the same conditions as those in Example 1, except that VDF was replaced by CTFE in an amount of 1.28 g, the amount of potassium permanganate fed was set to 3.87 mg, and the final amount of TFE fed was set to 1790 g, whereby a PTFE aqueous dispersion was obtained. The solid content concentration of the resulting PTFE aqueous dispersion was 33.0% by mass, and the average primary particle size was 263 nm.

A PTFE powder was obtained as in Example 1 using the resulting PTFE aqueous dispersion. Various physical properties of the resulting PTFE powder were measured. The results are shown in Table 1.

### Example 12

Polymerization was performed under the same conditions as those in Example 1, except that VDF was replaced by CTFE in an amount of 2.60 g and the final amount of TFE fed was set to 1660 g, whereby a PTFE aqueous dispersion was obtained. The solid content concentration of the resulting PTFE aqueous dispersion was 31.4% by mass, and the average primary particle size was 248 nm.

A PTFE powder was obtained as in Example 1 using the resulting PTFE aqueous dispersion. Various physical properties of the resulting PTFE powder were measured. The results are shown in Table 1.

### Example 13

Polymerization was performed under the same conditions as those in Example 5, except that VDF was replaced by HFP in an amount of 0.11 g, the amount of ammonium persulfate (APS) was set to 15.4 mg, the amount of hydroquinone fed was set to 17.9 mg, and the final amount of TFE fed was set to 1540 g at a polymerization pressure of 0.80 MPa and a polymerization temperature of 70°C, whereby a PTFE aqueous dispersion was obtained. The solid content concentration of the resulting PTFE aqueous dispersion was 29.8% by mass and the average primary particle size was 312 nm.

Using the resulting PTFE aqueous dispersion, a wet powder resulting from the coagulation was taken out as in Example 5, followed by drying at 180°C for 18 hours, whereby a PTFE powder was obtained. Various physical properties of the resulting PTFE powder were measured. The results are shown in Table 1.

### Comparative Example 1

Polymerization was performed under the same conditions as those in Example 1, except that the amount of VDF fed was set to 55.7 g and the amount of potassium permanganate fed was set to 4.46 mg, whereby a PTFE aqueous dispersion was obtained. The solid content concentration of the resulting PTFE aqueous dispersion was 33.1% by mass, and the average primary particle size was 224 nm.

A PTFE powder was obtained as in Example 1 using the resulting PTFE aqueous dispersion. Various physical properties of the resulting PTFE powder were measured. The results are shown in Table 1.

A sample was prepared using the resulting PTFE powder in conformity with ASTM D4895. The sample heated at 380°C for six hours and then cooled to room temperature showed severe foaming.

### Comparative Example 2

Polymerization was performed under the same conditions as those in Example 1, except that VDF was not fed, the amount of the white solid A fed was set to 13 g, the amount of succinic acid fed was set to 0.108 g, the amount of potassium permanganate fed was set to 3.5 mg, and the final amount of TFE fed was set to 1500 g, whereby a PTFE aqueous dispersion was obtained. The solid content concentration of the resulting PTFE aqueous dispersion was 29.5% by mass, and the average primary particle size was 380 nm.

A PTFE powder was obtained as in Example 1 using the resulting PTFE aqueous dispersion. Various physical properties of the resulting PTFE powder were measured. The results are shown in Table 1.

**[Table 1]**

| | Modifying monomer | | SSG | Extrusion pressure | Tensile strength at break | Strength ratio |
|---|---|---|---|---|---|---|
| | Type | Amount (% by mass) | (-) | (MPa) | (N) | (N/MPa) |
| Example 1 | VDF | 0.011 | 2.206 | 18.9 | 45.6 | 2.41 |
| Example 2 | VDF | 0.004 | 2.168 | 18.4 | 39.2 | 2.13 |
| Example 3 | VDF | 0.016 | 2.185 | 18.4 | 41.2 | 2.24 |
| Example 4 | VDF | 0.787 | 2.220 | 21.8 | 41.4 | 1.90 |
| Example 5 | VDF | 0.064 | 2.237 | 19.6 | 41.3 | 2.11 |
| Example 6 | VDF | 0.025 | 2.221 | 19.2 | 41.0 | 2.14 |
| Example 7 | VDF | 0.004 | 2.172 | 18.6 | 37.4 | 2.01 |
| Example 8 | VDF | 0.005 | 2.179 | 18.4 | 40.6 | 2.21 |
| Example 9 | VDF | 0.016 | 2.194 | 19.0 | 38.5 | 2.03 |
| Example 10 | VDF | 0.005 | 2.179 | 15.4 | 30.0 | 1.95 |
| Example 11 | CTFE | 0.050 | 2.150 | 18.4 | 39.4 | 2.14 |
| Example 12 | CTFE | 0.100 | 2.150 | 18.8 | 37.4 | 1.99 |
| Example 13 | HFP | 0.005 | 2.153 | 15.1 | 30.4 | 2.01 |
| Comparative Example 1 | VDF | 1.760 | 2.192 | 22.5 | 39.4 | 1.75 |
| Comparative Example 2 | - | - | 2.149 | 18.2 | 29.7 | 1.63 |

### Crack limit thickness

Flow coating of an aluminum plate (20 cm long × 10 cm wide × 1.5 mm thick) was performed by dropping about 5 ml of the PTFE aqueous dispersion. The coated aluminum plate was placed on an inclined plate set at about 80 degrees, allowing the applied PTFE aqueous dispersion to air-dry. Then, the air-dried PTFE on the aluminum plate was subjected to drying at 110°C for 15 minutes and subsequent firing at 380°C for 15 minutes, whereby a PTFE coating film was produced. The film thicknesses at the locations where cracks were identified by microscopic observation were measured using an eddy-current thickness gauge (available from Sanko Electronic Laboratory Co., Ltd., SWT-9100). The average of 10 measurements taken on each of two coated plates was used as the crack limit thickness.

### Example 14

A 6-L SUS reactor equipped with a stirrer was charged with 3600 g of deionized water, 180 g of paraffin wax, and 1.18 g of the white solid A. Next, the contents of the reactor were heated to 80°C while being suctioned and the reactor was simultaneously purged with tetrafluoroethylene (TFE) to remove oxygen in the reactor, and the contents were stirred. To the reactor was injected 5.82 g of vinylidene fluoride (VDF) with TFE, followed by further addition of TFE to set the pressure to 2.70 MPaG. An aqueous solution containing 7.2 mg of ammonium persulfate (APS) dissolved in deionized water was added to the reactor as an initiator. After injection of the initiator, the pressure dropped and the onset of polymerization was observed. TFE was added to the reactor so that the pressure was constant at 2.70 MPaG. When the amount of TFE fed reached 460 g, an aqueous solution containing 25.0 mg of hydroquinone in deionized water and an aqueous solution containing 3.24 g of the white solid A in deionized water were added. When the amount of TFE fed reached about 1950 g, feeding of TFE was stopped, stirring was stopped, and the reaction was terminated. Thereafter, the reactor was evacuated to return the pressure in the reactor to normal pressure, followed by nitrogen purge. The contents were taken out from the reactor and cooled. The paraffin wax was removed, whereby a PTFE aqueous dispersion was obtained. The solid content concentration of the resulting PTFE aqueous dispersion was 35.3% by mass, and the average primary particle size was 263 nm.

Pure water was added to the resulting aqueous dispersion, followed by high-speed stirring, whereby a wet PTFE powder was obtained. The resulting wet PTFE powder was dried at 150°C for 18 hours, whereby a PTFE powder was obtained. The resulting PTFE had a SSG of 2.228 and a VDF content of 0.049% by mass.

To 1000 g of the resulting PTFE aqueous dispersion were added 40 g of surfactant TDS-80 (DKS Co., Ltd, polyoxyethylene alkyl ether) and 160 g of pure water, followed by standing at 70°C, whereby a PTFE aqueous dispersion concentrate having a PTFE resin solid content concentration of 65% by mass or higher was obtained. To the resulting concentrate were added surfactant TDS-120 (DKS CO., Ltd., polyoxyethylene alkyl ether) and pure water, whereby a PTFE aqueous dispersion composition having a modified PTFE resin solid content concentration of 63% by mass and a surfactant content of 5% by mass relative to the modified PTFE was prepared. The resulting modified PTFE aqueous dispersion composition had a crack limit thickness of 4 µm.

## Claims

1. A modified polytetrafluoroethylene having a tensile strength at break of higher than 32.8 N and a standard specific gravity of 2.150 or more.

2. The modified polytetrafluoroethylene according to claim 1,
wherein the modified polytetrafluoroethylene has a strength ratio represented by "tensile strength at break (N)/extrusion pressure (MPa)" of higher than 1.90 N/MPa.

3. The modified polytetrafluoroethylene according to claim 1 or 2,
wherein the modified polytetrafluoroethylene has a tensile strength at break of higher than 37.0 N.

4. The modified polytetrafluoroethylene according to any one of claims 1 to 3,
wherein the modified polytetrafluoroethylene has a standard specific gravity of 2.155 or more.

5. The modified polytetrafluoroethylene according to any one of claims 1 to 4,
wherein the modified polytetrafluoroethylene has a standard specific gravity of 2.160 or more.

6. A modified polytetrafluoroethylene having a standard specific gravity of 2.150 or more and a strength ratio represented by "tensile strength at break (N)/extrusion pressure (MPa)" of higher than 1.90 N/MPa.

7. A modified polytetrafluoroethylene comprising:
a tetrafluoroethylene unit; and
a vinylidene fluoride unit,
the vinylidene fluoride unit being contained in an amount of 1.0% by mass or less in all polymerized units.

8. The modified polytetrafluoroethylene according to any one of claims 1 to 7,
wherein the modified polytetrafluoroethylene is in the form of powder.

9. The modified polytetrafluoroethylene according to any one of claims 1 to 8,
wherein the modified polytetrafluoroethylene is in the form of fine powder.

10. An aqueous dispersion comprising the modified polytetrafluoroethylene according to any one of claims 1 to 7 in the form of particles.
